# EUROPEAN PATENT SPECIFICATION

(11) **EP 3 181 324 B1**
(45) Date of publication and mention of the grant of the patent: **27.05.2020**
(21) Application number: 15831644.8
(22) Date of filing: 29.07.2015
(51) Int. Cl.: B22F 3/00, B22F 3/105, B22F 3/115, C23C 18/08, B33Y 10/00, B33Y 30/00, B22F 3/24

(54) **RAPID FORMING APPARATUS AND METHOD BASED ON METAL CARBONYL COMPLEXES IN 3D PRINTING**
SCHNELLFORMUNGSVORRICHTUNG UND -VERFAHREN AUF BASIS VON METALLKARBONYLKOMPLEXEN BEIM 3D-DRUCKEN
APPAREIL ET PROCÉDÉ DE FORMATION RAPIDE EN SE BASANT SUR DES COMPLEXES CARBONYLE/MÉTAUX DANS L'IMPRESSION 3D

(30) Priority: 15.08.2014 CN 201410400792
(43) Date of publication of application: 21.06.2017
(73) Proprietor: Jiangxi Yuean Advanced Materials Co., Ltd., Dayu County, Jiangxi Province 341000 (CN)
(72) Inventor: LI, Shangkui, Ganzhou Jiangxi 341500 (CN); WANG, Bing, Ganzhou Jiangxi 341500 (CN); LI, Bo, Ganzhou Jiangxi 341500 (CN); LI, Xianxin, Ganzhou Jiangxi 341500 (CN); ZOU, Haiping, Ganzhou Jiangxi 341500 (CN); LUO, Yongdi, Ganzhou Jiangxi 341500 (CN); ZHANG, Feisheng, Ganzhou Jiangxi 341500 (CN); CAI, Wei, Ganzhou Jiangxi 341500 (CN)
(74) Representative: Croce, Valeria
(86) International application number: PCT/CN2015/085452
(87) International publication number: WO 2016/023415

(56) References cited:
- CN-A- 102 744 172
- CN-A- 103 056 367
- CN-A- 103 350 508
- CN-A- 103 980 479
- CN-A- 104 148 629
- CN-C- 1 139 448
- CN-U- 204 052 900
- US-A1- 2004 251 581
- US-A1- 2011 061 591
- WANG, ZHIYAO SPECIAL PROCESSING FORMING MANUAL 31 July 2009, pages 348 - 350, XP008185788

## Description

### Technical Field

The present invention relates to the advanced manufacturing technology field of 3D printing, and particularly to a rapid prototyping 3D printing apparatus and method using a metal carbonyl complex as a raw material.

### Background Art

Three-dimensional printing (3D printing) is a rapid prototyping technology based on a digital model file, in which a three-dimensional model designed by a computer is used as a blueprint, and by means of layered discretization implemented through software and a CNC (computerized numerical control) forming system, various special materials are stacked and bonded layer by layer by utilizing laser beams, hot melt nozzles or the like, and finally a physical product is manufactured through superimposition. The most important feature of this technology is that it can produce articles of almost any shape.

At present, materials used for 3D printing include plastics, photosensitive resins, metal powders, non-metallic powders, and etc. In addition, studies on raw materials, such as bones, electrorheological fluids, and gallium-indium liquid metal, are also in progress. However, from the current view, the 3D printing technology still faces a series of problems, such as slow manufacturing speed, less types of materials for products, poor performance, and high cost of machines and materials. Especially, the current liquid metals are expensive, have a single metallic element ingredient and cannot be applied in large scale.

### Disclosure of the Invention

### (1) Technical problems to be solved

In order to overcome the shortcomings of products in the prior art, such as less types of metal materials, poor products quality and slow preparation speed, the technical problem to be solved by the present invention is to provide a rapid prototyping 3D printing apparatus and method based on a metal carbonyl complex, which can prepare a rich variety of metal products of a good quality at a quick preparation speed. 3d printing using a metal carbonyl complex as such is known from Wang Zhiyao, Special Processing Forming Manual, Chemical Industry Press, 31. July 2009, p. 348-350 (ISBN 978-7-122-05316-9).

### (2) Technical solutions

In order to solve the above mentioned technical problems, the present invention provides such a rapid prototyping 3D printing apparatus based on a metal carbonyl complex, which includes a gas inlet, a glove box, a nozzle, a deposition table, a platform heater, a gas-liquid collector, a collector exhaust pipe, a gas outlet pipe, a gas condenser, a nozzle control line, a servo mechanism, a servo mechanism control line, a liquid-state metal carbonyl complex control line, a computer, a solid-state metal carbonyl complex-diethyl ether solution control line, a solution heater, a flowmeter I, a solution storage tank, a liquid storage tank, a flowmeter II, a liquid-state metal carbonyl complex conveying pipe, a solid-state metal carbonyl complex-diethyl ether solution conveying pipe, a liquid heater, a drive pump, and a glove box operation opening.

The gas inlet is mounted at a bottom of the glove box. The glove box operation opening is provided on the glove box. The gas outlet pipe is mounted at an upper part of the glove box. The gas condenser is mounted on the gas outlet pipe. The gas-liquid collector is connected at an end of the gas outlet pipe. The collector exhaust pipe is mounted on the gas-liquid collector.

The platform heater is placed inside the glove box. The deposition table is mounted on the platform heater. The nozzle is arranged above the deposition table. The servo mechanism is connected with the computer via the servo mechanism control line. The nozzle is connected with the servo mechanism via the nozzle control line. The drive pump is connected with the nozzle, and the drive pump is connected with the computer via the solid-state metal carbonyl complex-diethyl ether solution control line and the liquid-state metal carbonyl complex control line.

The flowmeter I is arranged on the solid-state metal carbonyl complex-diethyl ether solution conveying pipe, the solution heater is arranged on the solid-state metal carbonyl complex-diethyl ether solution conveying pipe, and the solution storage tank is connected with the drive pump via the solid-state metal carbonyl complex-diethyl ether solution conveying pipe.

The flowmeter II is arranged on the liquid-state metal carbonyl complex conveying pipe, the liquid heater is arranged on the liquid-state metal carbonyl complex conveying pipe, and the liquid storage tank is connected with the drive pump via the liquid-state metal carbonyl complex conveying pipe.

Preferably, a plurality of feed ports and a mixing chamber are provided inside the nozzle.

Preferably, the solid-state metal carbonyl complex is selected from the group consisting of chromium hexacarbonyl, tungsten hexacarbonyl, molybdenum hexacarbonyl, vanadium hexacarbonyl, dicobalt octacarbonyl, and dimanganese decacarbonyl.

Preferably, the liquid-state metal carbonyl complex is selected from the group consisting of nickel tetracarbonyl and iron pentacarbonyl.

Preferably, the liquid storage tank is in number of one or two.

Preferably, the solution storage tank is in number of one to six.

The operating principle of the apparatus is as follows:
First, sufficient amounts of the liquid-state metal carbonyl complex and the solid-state metal carbonyl complex-diethyl ether solution are preloaded into the liquid storage tank and the solution storage tank, respectively, where corresponding metal carbonyl complexes are selected as raw materials according to material requirements of a solid required to be printed. Then, corresponding pipes are communicated. A sufficient amount of treatment liquid is preloaded into the gas-liquid collector, and a protective gas such as argon or nitrogen is introduced into the glove box from the gas inlet, so that a protective gas atmosphere is created inside the glove box to prevent oxidation of an elemental metal.

The computer is started up, and solid model information constructed by the computer is transmitted, via the servo mechanism control line, into the servo mechanism to generate a three-dimensional motion control command, and is transmitted, via the liquid-state metal carbonyl complex control line, into the drive pump and further into the respective heater to generate a flow rate control command for controlling the flow of the liquid-state metal carbonyl complex into the nozzle and a temperature control command for the respective heater, and is transmitted, via the solid-state metal carbonyl complex-diethyl ether solution control line, into the drive pump and further into the respective heater to generate a flow rate control command for controlling the flow of the solid-state metal carbonyl complex-diethyl ether solution into the nozzle and a temperature control command for the respective heater.

The nozzle is controlled, according to the solid model information, the three-dimensional motion control command and the flow rate control commands for the drive pump, to directionally and quantitatively spray one metal carbonyl complex or a mixture of multiple metal carbonyl complexes onto the deposition table at a certain temperature, for stacking the metal carbonyl complexes layer by layer. During this process, the flowmeters serve to measure the flow rates of the liquid-state metal carbonyl complex and the solid-state metal carbonyl complex-diethyl ether solution, the liquid heater and the solution heater serve to maintain their corresponding metal carbonyl complexes in a liquid state at room temperature, so as to facilitate flow of the metal carbonyl complexes and preheat the corresponding metal carbonyl complexes. Under the action of the platform heater, the metal carbonyl complex on the deposition table is heated and thus decomposed into an elemental metal and CO. The decomposed elemental metal is deposited on the deposition table, the volatilized diethyl ether and CO enter the gas-liquid collector after being condensed by the gas condenser, and the redundant waste gas is discharged via the collector exhaust pipe into an existing waste gas treatment device for treatment.

The printed solid model is taken out through the glove box operation opening, and a relevant heat treatment is performed therefor according to product requirements.

A rapid prototyping method performed by the rapid prototyping 3D printing apparatus based on a metal carbonyl complex, where the method includes:
a. adding, according to material requirements of a solid required to be printed, a corresponding liquid-state metal carbonyl complex and a corresponding solid-state metal carbonyl complex-diethyl ether solution into the liquid storage tank and the solution storage tank, respectively, and communicating corresponding pipes;
b. preloading a sufficient amount of treatment liquid into the gas-liquid collector, and introducing a protective gas such as argon or nitrogen into the glove box from the gas inlet, so that a protective gas atmosphere is created inside the glove box to prevent oxidation of an elemental metal;
c. the computer constructing solid model information, and generating a three-dimensional motion control command and a flow rate control command for the drive pump, as well as temperature control commands for the individual heaters;
d. controlling, according to the temperature control commands for the solution heater and the liquid heater, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater, the metal carbonyl complexes to decompose and diethyl ether to volatilize;
e. controlling, according to the solid model information constructed by the computer, the three-dimensional motion control command and the flow rate control command for the drive pump, the nozzle to directionally and quantitatively spray a mixture of the metal carbonyl complexes onto the deposition table at a certain temperature, for stacking the metal carbonyl complexes layer by layer;
f. condensing a diethyl ether gas and CO by the gas condenser, and then introducing the condensed diethyl ether gas and CO into the gas-liquid collector for collection and treatment; and
g. performing a relevant heat treatment on the printed solid model, according to product requirements.

Preferably, the metal carbonyl complex is selected from the group consisting of nickel tetracarbonyl, iron pentacarbonyl, chromium hexacarbonyl, tungsten hexacarbonyl, molybdenum hexacarbonyl, vanadium hexacarbonyl, dicobalt octacarbonyl, and dimanganese decacarbonyl.

Preferably, the platform heater is at a temperature ranging from 34.6 °C to 160 °C.

Preferably, a solvent in the solution storage tank is diethyl ether.

The liquid-state metal carbonyl complex is decomposed into an elemental metal and CO when being heated. And when the solid-state metal carbonyl complex-diethyl ether solution is heated, the diethyl ether contained therein volatilizes, and an elemental metal and CO are generated.

During the heating process, at first, the platform heater is controlled to be at a safe temperature ranging from 34.6 °C to 160 °C, as such a temperature is favorable for the decomposition of most metal carbonyl complexes and the volatilization of diethyl ether.

### (3) Beneficial effects:

The present invention has advantages of, for example, a simple structure, convenient operations, a low manufacturing cost, and enabling miniaturization, and thus is applicable to the manufacture of metal parts and electronic components and other fields. Carbonyl complexes of transition metals, such as iron, nickel, cobalt, chromium, tungsten, molybdenum, manganese and vanadium, may be provided as the raw materials, and a metal model with one of the metal elements or with some of the metal elements in any ratio may be printed. Since the metal carbonyl complex produces a pure metal after thermal decomposition, the content of impurities in the product is effectively reduced, and the quality of the product is improved.

### Brief Description of Drawings

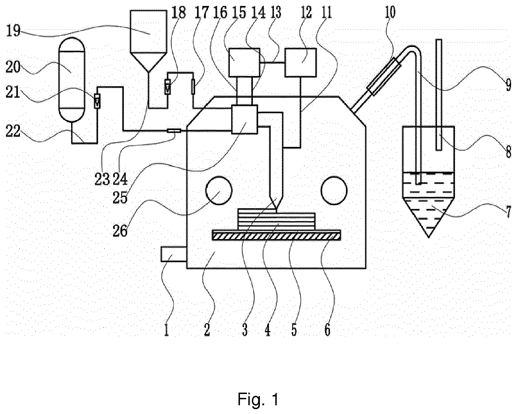

Fig. 1 is a schematic structural view of the present invention.

Reference numbers in the figure are as follows: 1-gas inlet, 2-glove box, 3-nozzle, 4-solid model, 5-deposition table, 6-platform heater, 7-gas-liquid collector, 8-collector exhaust pipe, 9-gas outlet pipe, 10-gas condenser, 11-nozzle control line, 12-servo mechanism, 13-servo mechanism control line, 14-liquid-state metal carbonyl complex control line, 15-computer, 16-solid-state metal carbonyl complex-diethyl ether solution control line, 17-solution heater, 18-flowmeter I, 19-solution storage tank, 20-liquid storage tank, 21-flowmeter II, 22-liquid-state metal carbonyl complex conveying pipe, 23-solid-state metal carbonyl complex-ether solution conveying pipe, 24-liquid heater, 25-drive pump, 26-glove box operation opening.

### Detailed Description of Embodiments

The present invention will be further described below in conjunction with the drawing and embodiments.

### Embodiment 1

As shown in Fig. 1, a rapid prototyping 3D printing apparatus based on a metal carbonyl complex includes a gas inlet 1, a glove box 2, a nozzle 3, a deposition table 5, a platform heater 6, a gas-liquid collector 7, a collector exhaust pipe 8, a gas outlet pipe 9, a gas condenser 10, a nozzle control line 11, a servo mechanism 12, a servo mechanism control line 13, a liquid-state metal carbonyl complex control line 14, a computer 15, a solid-state metal carbonyl complex-diethyl ether solution control line 16, a solution heater 17, a flowmeter I 18, a solution storage tank 19, a liquid storage tank 20, a flowmeter II 21, a liquid-state metal carbonyl complex conveying pipe 22, a solid-state metal carbonyl complex-diethyl ether solution conveying pipe 23, a liquid heater 24, a drive pump 25, and a glove box operation opening 26.

The gas inlet 1 is mounted at a bottom of the glove box 2. The glove box operation opening 26 is provided on the glove box 2. The gas outlet pipe 9 is mounted at an upper part of the glove box 2. The gas condenser 10 is mounted on the gas outlet pipe 9. The gas-liquid collector 7 is connected at an end of the gas outlet pipe 9. The collector exhaust pipe 8 is mounted on the gas-liquid collector 7.

The platform heater 6 is placed inside the glove box 2. The deposition table 5 is mounted on the platform heater 6. The nozzle 3 is arranged above the deposition table 5. The servo mechanism 12 is connected with the computer 15 via the servo mechanism control line 13. The nozzle 3 is connected with the servo mechanism 12 via the nozzle control line 11. The drive pump 25 is connected with the nozzle 3, and the drive pump 25 is connected with the computer 15 via the solid-state metal carbonyl complex-diethyl ether solution control line 16 and the liquid-state metal carbonyl complex control line 14.

The flowmeter I 18 is arranged on the solid-state metal carbonyl complex-diethyl ether solution conveying pipe 23, the solution heater 17 is arranged on the solid-state metal carbonyl complex-diethyl ether solution conveying pipe 23, and the solution storage tank 19 is connected with the drive pump 25 via the solid-state metal carbonyl complex-diethyl ether solution conveying pipe 23.

The flowmeter II 21 is arranged on the liquid-state metal carbonyl complex conveying pipe 22, the liquid heater 24 is arranged on the liquid-state metal carbonyl complex conveying pipe 22, and the liquid storage tank 20 is connected with the drive pump 25 via the liquid-state metal carbonyl complex conveying pipe 22.

A plurality of feed ports and a mixing chamber are provided inside the nozzle 3.

The solid-state metal carbonyl complex is selected from the group consisting of chromium hexacarbonyl, tungsten hexacarbonyl, molybdenum hexacarbonyl, vanadium hexacarbonyl, dicobalt octacarbonyl, and dimanganese decacarbonyl. The liquid-state metal carbonyl complex is selected from the group consisting of nickel tetracarbonyl and iron pentacarbonyl.

The liquid storage tank 20 is in number of one, and the solution storage tank 19 is in number of three.

The operating principle of the apparatus is as follows:
First, sufficient amounts of the liquid-state metal carbonyl complex and the solid-state metal carbonyl complex-diethyl ether solution are preloaded into the liquid storage tank 20 and the solution storage tank 19, respectively, where corresponding metal carbonyl complexes are selected as raw materials according to material requirements of a solid required to be printed. Then, corresponding pipes are communicated. A sufficient amount of treatment liquid is preloaded into the gas-liquid collector 7, and a protective gas such as argon or nitrogen is introduced into the glove box 2 from the gas inlet 1, so that a protective gas atmosphere is created inside the glove box 2 to prevent oxidation of an elemental metal.

The computer 15 is started up, and solid model information constructed by the computer 15 is transmitted, via the servo mechanism control line 13, into the servo mechanism 12 to generate a three-dimensional motion control command, and is transmitted, via the liquid-state metal carbonyl complex control line 14, into the drive pump 25 and further into the respective heater to generate a flow rate control command for controlling the flow of the liquid-state metal carbonyl complex into the nozzle 3 and a temperature control command for the respective heater, and is transmitted, via the solid-state metal carbonyl complex-diethyl ether solution control line 16, into the drive pump 25 and further into the respective heater to generate a flow rate control command for controlling the flow of the solid-state metal carbonyl complex-diethyl ether solution into the nozzle 3 and a temperature control command for the respective heater.

The nozzle 3 is controlled, according to the solid model information, the three-dimensional motion control command and the flow rate control commands for the drive pump 25, to directionally and quantitatively spray one metal carbonyl complex or a mixture of multiple metal carbonyl complexes onto the deposition table 5 at a certain temperature, for stacking the same layer by layer. During this process, the flowmeters serve to measure the flow rates of the liquid-state metal carbonyl complex and the solid-state metal carbonyl complex-diethyl ether solution, the solution heater 17 and the liquid heater 24 serve to maintain the corresponding metal carbonyl complexes in a liquid state at room temperature, so as to facilitate flow of the metal carbonyl complexes and preheat the corresponding metal carbonyl complexes. Under the action of the platform heater 6, the metal carbonyl complex on the deposition table 5 is heated and thus decomposed into an elemental metal and CO. The decomposed elemental metal is deposited on the deposition table 5, the volatilized diethyl ether and CO enter the gas-liquid collector 7 after being condensed by the gas condenser 10, and the redundant waste gas is discharged via the collector exhaust pipe 8 into an existing waste gas treatment device for treatment.

The printed solid model is taken out through the glove box operation opening 26, and a relevant heat treatment is performed therefor according to product requirements.

### Embodiment 2

As shown in Fig. 1, a rapid prototyping 3D printing apparatus based on a metal carbonyl complex includes a gas inlet 1, a glove box 2, a nozzle 3, a deposition table 5, a platform heater 6, a gas-liquid collector 7, a collector exhaust pipe 8, a gas outlet pipe 9, a gas condenser 10, a nozzle control line 11, a servo mechanism 12, a servo mechanism control line 13, a liquid-state metal carbonyl complex control line 14, a computer 15, a solid-state metal carbonyl complex-diethyl ether solution control line 16, a solution heater 17, a flowmeter I 18, a solution storage tank 19, a liquid storage tank 20, a flowmeter II 21, a liquid-state metal carbonyl complex conveying pipe 22, a solid-state metal carbonyl complex-diethyl ether solution conveying pipe 23, a liquid heater 24, a drive pump 25, and a glove box operation opening 26.

The gas inlet 1 is mounted at a bottom of the glove box 2. The glove box operation opening 26 is provided on the glove box 2. The gas outlet pipe 9 is mounted at an upper part of the glove box 2. The gas condenser 10 is mounted on the gas outlet pipe 9. The gas-liquid collector 7 is connected at an end of the gas outlet pipe 9. The collector exhaust pipe 8 is mounted on the gas-liquid collector 7.

The platform heater 6 is placed inside the glove box 2. The deposition table 5 is mounted on the platform heater 6. The nozzle 3 is arranged above the deposition table 5. The servo mechanism 12 is connected with the computer 15 via the servo mechanism control line 13. The nozzle 3 is connected with the servo mechanism 12 via the nozzle control line 11. The drive pump 25 is connected with the nozzle 3, and the drive pump 25 is connected with the computer 15 via the solid-state metal carbonyl complex-diethyl ether solution control line 16 and the liquid-state metal carbonyl complex control line 14.

The flowmeter I 18 is arranged on the solid-state metal carbonyl complex-diethyl ether solution conveying pipe 23, the solution heater 17 is arranged on the solid-state metal carbonyl complex-diethyl ether solution conveying pipe 23, and the solution storage tank 19 is connected with the drive pump 25 via the solid-state metal carbonyl complex-diethyl ether solution conveying pipe 23.

The flowmeter II 21 is arranged on the liquid-state metal carbonyl complex conveying pipe 22, the liquid heater 24 is arranged on the liquid-state metal carbonyl complex conveying pipe 22, and the liquid storage tank 20 is connected with the drive pump 25 via the liquid-state metal carbonyl complex conveying pipe 22.

A plurality of feed ports and a mixing chamber are provided inside the nozzle 3.

The solid-state metal carbonyl complex is selected from the group consisting of chromium hexacarbonyl, tungsten hexacarbonyl, molybdenum hexacarbonyl, vanadium hexacarbonyl, dicobalt octacarbonyl, and dimanganese decacarbonyl. The liquid-state metal carbonyl complex is selected from the group consisting of nickel tetracarbonyl and iron pentacarbonyl.

The liquid storage tank 20 is in number of two, and the solution storage tank 19 is in number of six.

### Operating principle:

The operating principle of the apparatus is as follows:
First, sufficient amounts of the liquid-state metal carbonyl complex and the solid-state metal carbonyl complex-diethyl ether solution are preloaded into the liquid storage tank 20 and the solution storage tank 19, respectively, where corresponding metal carbonyl complexes are selected as raw materials according to material requirements of a solid required to be printed. Then, corresponding pipes are communicated. A sufficient amount of treatment liquid is preloaded into the gas-liquid collector 7, and a protective gas such as argon or nitrogen is introduced into the glove box 2 from the gas inlet 1, so that a protective gas atmosphere is created inside the glove box 2 to prevent oxidation of an elemental metal.

The computer 15 is started up, and solid model information constructed by the computer 15 is transmitted, via the servo mechanism control line 13, into the servo mechanism 12 to generate a three-dimensional motion control command, and is transmitted, via the liquid-state metal carbonyl complex control line 14, into the drive pump 25 and further into the respective heater to generate a flow rate control command for controlling the flow of the liquid-state metal carbonyl complex into the nozzle 3 and a temperature control command for the respective heater, and is transmitted, via the solid-state metal carbonyl complex-diethyl ether solution control line 16, into the drive pump 25 and further into the respective heater to generate a flow rate control command for controlling the flow of the solid-state metal carbonyl complex-diethyl ether solution into the nozzle 3 and a temperature control command for the respective heater.

The nozzle 3 is controlled, according to the solid model information, the three-dimensional motion control command and the flow rate control commands for the drive pump 25, to directionally and quantitatively spray one metal carbonyl complex or a mixture of multiple metal carbonyl complexes onto the deposition table 5 at a certain temperature, for stacking the same layer by layer. During this process, the flowmeters serve to measure the flow rates of the liquid-state metal carbonyl complex and the solid-state metal carbonyl complex-diethyl ether solution, the solution heater 17 and the liquid heater 24 serve to maintain the corresponding metal carbonyl complexes in a liquid state at room temperature, so as to facilitate flow of the metal carbonyl complexes and preheat the corresponding metal carbonyl complexes. Under the action of the platform heater 6, the metal carbonyl complex on the deposition table 5 is heated and thus decomposed into an elemental metal and CO. The decomposed elemental metal is deposited on the deposition table 5, the volatilized diethyl ether and CO enter the gas-liquid collector 7 after being condensed by the gas condenser 10, and the redundant waste gas is discharged via the collector exhaust pipe 8 into an existing waste gas treatment device for treatment.

The printed solid model is taken out through the glove box operation opening 26, and a relevant heat treatment is performed therefor according to product requirements.

Embodiments 3 to 10 do not fall within the scope of the method according to the claims.

### Embodiment 3

A rapid prototyping method performed by an rapid prototyping 3D printing apparatus based on a metal carbonyl complex, where the apparatus is the rapid prototyping 3D printing apparatus based on a metal carbonyl complex as described in Embodiment 1, and the method includes:
a. adding, according to material requirements of a solid required to be printed, an appropriate amount of iron pentacarbonyl into the liquid storage tank 20, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control command for the liquid heater 24, the corresponding metal carbonyl complex to be in a liquid state at room temperature, so as to facilitate flow of the metal carbonyl complex and preheat the corresponding metal carbonyl complex, and controlling, according to a temperature control command for a temperature controller of the platform heater 6, the iron pentacarbonyl to decompose;
e. controlling, according to the solid model information constructed by the computer 15, the three-dimensional motion control command and the flow rate control command for the drive pump 25, the nozzle 3 to directionally and quantitatively spray the iron pentacarbonyl onto the deposition table 5 at a certain temperature, for stacking the same layer by layer;
f. condensing CO by the gas condenser 10, and then introducing the condensed CO into the gas-liquid collector 7 for collection and treatment; and
g. performing a relevant heat treatment on the printed solid model, according to product requirements.

The platform heater 6 is at a temperature ranging from 34.6 °C to 103.6 °C.

### Embodiment 4

A rapid prototyping method performed by a rapid prototyping 3D printing apparatus based on a metal carbonyl complex, where the apparatus is the rapid prototyping 3D printing apparatus based on a metal carbonyl complex as described in Embodiment 1, and the method includes:
a. adding, according to material requirements of a solid required to be printed, an appropriate amount of nickel tetracarbonyl into the liquid storage tank 20, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of the elemental metal;
c. the computer 15 constructing solid model information, and generating a three-dimensional motion control command and a flow rate control command for the drive pump 25, as well as temperature control commands for the individual heaters;
d. controlling, according to the temperature control command for the liquid heater 24, the corresponding metal carbonyl complex to be in a liquid state at room temperature, so as to facilitate flow of the metal carbonyl complex and preheat the corresponding metal carbonyl complex, and controlling, according to a temperature control command for a temperature controller of the platform heater 6, the nickel tetracarbonyl to decompose;
e. controlling, according to the solid model information constructed by the computer 15, the three-dimensional motion control command and the flow rate control command for the drive pump 25, the nozzle 3 to directionally and quantitatively spray the nickel tetracarbonyl onto the deposition table 5 at a certain temperature, for stacking the same layer by layer;
f. condensing CO by the gas condenser 10, and then introducing the condensed CO into the gas-liquid collector 7 for collection and treatment; and
g. performing a relevant heat treatment on the printed solid model, according to product requirements.

The platform heater 6 is at a temperature ranging from 34.6 °C to 42.2 °C.

### Embodiment 5

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a molybdenum hexacarbonyl-diethyl ether solution into the solution storage tanks 19, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of the elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the molybdenum hexacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 151 °C.

The solvent in the solution storage tank 19 is diethyl ether.

### Embodiment 6

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a chromium hexacarbonyl-diethyl ether solution into the solution storage tanks 19, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the chromium hexacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 110 °C.

The solvent in the solution storage tank 19 is diethyl ether.

### Embodiment 7

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a tungsten hexacarbonyl-diethyl ether solution into the solution storage tanks 19, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the tungsten hexacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 160 °C.

The solvent in the solution storage tank 19 is diethyl ether.

### Embodiment 8

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a vanadium hexacarbonyl-diethyl ether solution into the solution storage tanks 19, and communicating corresponding pipes;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the vanadium hexacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 50 °C.

The solvent in the solution storage tank 19 is diethyl ether.

### Embodiment 9

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a dicobalt octacarbonyl-diethyl ether solution into the solution storage tanks 19, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the dicobalt octacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 51 °C.

The solvent in the solution storage tank 19 is diethyl ether.

### Embodiment 10

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of a dimanganese decacarbonyl-diethyl ether solution into the solution storage tanks 19, and communicating the corresponding pipe;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the dimanganese decacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 154 °C.

The solvent in the solution storage tank 19 is diethyl ether.

### Embodiment 11

A rapid prototyping method performed by a rapid prototyping 3D printing apparatus based on a metal carbonyl complex, where the apparatus is the rapid prototyping 3D printing apparatus based on a metal carbonyl complex as described in Embodiment 2, and the method includes:
a. adding, according to material requirements of a solid required to be printed, an appropriate amount of iron pentacarbonyl into the liquid storage tanks 20 and an appropriate amount of a molybdenum hexacarbonyl-diethyl ether solution into the solution storage tanks 19, and communicating corresponding pipes;
b. preloading a sufficient amount of treatment liquid into the gas-liquid collector 7, and introducing a protective gas such as argon or nitrogen into the glove box 2 from the gas inlet 1, so that a protective gas atmosphere is created inside the glove box 2 to prevent oxidation of an elemental metal;
c. the computer 15 constructing solid model information, and generating a three-dimensional motion control command and a flow rate control command for the drive pump 25, as well as temperature control commands for the individual heaters;
d. controlling, according to the temperature control commands for the solution heater 17 and the liquid heater 24, the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater 6, the metal carbonyl complexes to decompose and diethyl ether to volatilize;
e. controlling, according to the solid model information constructed by the computer 15, the three-dimensional motion control command and the flow rate control command for the drive pump 25, the nozzle 3 to directionally and quantitatively spray the iron pentacarbonyl and the molybdenum hexacarbonyl-diethyl ether solution onto the deposition table 5 at a certain temperature, for stacking the same layer by layer;
f. condensing the diethyl ether gas and CO by the gas condenser 10, and then introducing the condensed diethyl ether gas and CO into the gas-liquid collector 7 for collection and treatment; and
g. performing a relevant heat treatment on the printed solid model, according to product requirements.

The platform heater 6 is at a temperature ranging from 34.6 °C to 151 °C.

The solvent in the solution storage tank 19 is diethyl ether.

The embodiments described above are merely representative of preferred embodiments of the present invention, and are described in a specific and detailed manner, but are not to be construed thereby as limiting the scope of the present patent for invention. It shall be noted that some modifications, improvements, and substitutions might be made by those skilled in the art without departing from the concept of the present invention, and would fall within the scope of protection of the present invention. Accordingly, the scope of protection of the present patent for invention is to be determined by the appended claims.

## Claims

1. A rapid prototyping 3D printing apparatus based on a metal carbonyl complex, **characterized by** comprising: a gas inlet (1), a glove box (2), a nozzle (3), a deposition table (5), a platform heater (6), a gas-liquid collector (7), a collector exhaust pipe (8), a gas outlet pipe (9), a gas condenser (10), a nozzle control line (11), a servo mechanism (12), a servo mechanism control line (13), a liquid-state metal carbonyl complex control line (14), a computer (15), a solid-state metal carbonyl complex-diethyl ether solution control line (16), a solution heater (17), a flowmeter I (18), a solution storage tank (19), a liquid storage tank (20), a flowmeter II (21), a liquid-state metal carbonyl complex conveying pipe (22), a solid-state metal carbonyl complex-diethyl ether solution conveying pipe (23), a liquid heater (24), a drive pump (25), and a glove box operation opening (26),
wherein the gas inlet (1) is mounted at a bottom of the glove box (2), the glove box operation opening (26) is provided on the glove box (2), the gas outlet pipe (9) is mounted at an upper part of the glove box (2), the gas condenser (10) is mounted on the gas outlet pipe (9), the gas-liquid collector (7) is connected at an end of the gas outlet pipe (9), and the collector exhaust pipe (8) is mounted on the gas-liquid collector (7);
the platform heater (6) is placed inside the glove box (2), the deposition table (5) is mounted on the platform heater (6), the nozzle (3) is arranged above the deposition table (5), the servo mechanism (12) is connected with the computer (15) via the servo mechanism control line (13), the nozzle (3) is connected with the servo mechanism (12) via the nozzle control line (11), the drive pump (25) is connected with the nozzle (3), and the drive pump (25) is connected with the computer (15) via the solid-state metal carbonyl complex-diethyl ether solution control line (16) and the liquid-state metal carbonyl complex control line (14);
the flowmeter I (18) is arranged on the solid-state metal carbonyl complex-diethyl ether solution conveying pipe (23), the solution heater (17) is arranged on the solid-state metal carbonyl complex-diethyl ether solution conveying pipe (23), and the solution storage tank (19) is connected with the drive pump (25) via the solid-state metal carbonyl complex-diethyl ether solution conveying pipe (23); and
the flowmeter II (21) is arranged on the liquid-state metal carbonyl complex conveying pipe (22), the liquid heater (24) is arranged on the liquid-state metal carbonyl complex conveying pipe (22), and the liquid storage tank (20) is connected with the drive pump (25) via the liquid-state metal carbonyl complex conveying pipe (22).

2. The rapid prototyping 3D printing apparatus based on a metal carbonyl complex according to claim 1, **characterized in that** a plurality of feed ports and a mixing chamber are provided inside the nozzle (3).

4. The rapid prototyping 3D printing apparatus based on a metal carbonyl complex according to claim 1, **characterized in that** the liquid storage tank (20) is in number of one or two.

5. The rapid prototyping 3D printing apparatus based on a metal carbonyl complex according to claim 1, **characterized in that** the solution storage tank (19) is in number of one to six.

6. A rapid prototyping method performed by the rapid prototyping 3D printing apparatus based on a metal carbonyl complex according to claim 1, **characterized in that** the method comprises steps of:
a. adding, according to material requirements of a solid required to be printed, a corresponding liquid-state metal carbonyl complex and a corresponding solid-state metal carbonyl complex-diethyl ether solution into the liquid storage tank (20) and the solution storage tank (19), respectively, and communicating corresponding pipes;
b. preloading a sufficient amount of treatment liquid into the gas-liquid collector (7), and introducing argon or nitrogen into the glove box (2) from the gas inlet (1), so that a protective gas atmosphere is created inside the glove box (2), to prevent oxidation of an elemental metal;
c. the computer (15) constructing solid model information, and generating a three-dimensional motion control command and a flow rate control command for the drive pump (25), as well as temperature control commands for the individual heaters;
d. controlling, according to the temperature control commands for the solution heater (17) and the liquid heater (24), the corresponding metal carbonyl complexes to be in a liquid state at room temperature, so as to facilitate flow of the metal carbonyl complexes and preheat the corresponding metal carbonyl complexes, and controlling, according to a temperature control command for a temperature controller of the platform heater (6), the metal carbonyl complexes to decompose and diethyl ether to volatilize;
e. controlling, according to the solid model information constructed by the computer (15), the three-dimensional motion control command and the flow rate control command for the drive pump (25), the nozzle (3) to directionally and quantitatively spray a mixture of the metal carbonyl complexes onto the deposition table (5) at a certain temperature, for stacking the metal carbonyl complexes layer by layer;
f. condensing a diethyl ether gas and CO by the gas condenser (10), and then introducing the condensed diethyl ether gas and CO into the gas-liquid collector (7) for collection and treatment; and
g. performing a relevant heat treatment on the printed solid model, according to product requirements.

7. The rapid prototyping method performed by the rapid prototyping 3D printing apparatus based on a metal carbonyl complex according to claim 6, **characterized in that** the metal carbonyl complex is selected from the grouping consisting of nickel tetracarbonyl, iron pentacarbonyl, chromium hexacarbonyl, tungsten hexacarbonyl, molybdenum hexacarbonyl, vanadium hexacarbonyl, dicobalt octacarbonyl, and dimanganese decacarbonyl.

8. The rapid prototyping method performed by the rapid prototyping 3D printing apparatus based on a metal carbonyl complex according to claim 6, **characterized in that** the platform heater (6) is at a temperature ranging from 34.6 °C to 160 °C.

## Patentansprüche

1. Rapid-Prototyping-3D-Druckvorrichtung auf Basis eines Metallcarbonylkomplexes, **gekennzeichnet durch**: einen Gaseinlass (1), einen Handschuhkasten (2), eine Düse (3), einen Ablagetisch (5), einen Plattformerhitzer (6), einen Gas-Flüssigkeit-Kollektor (7), ein Kollektorableitungsrohr (8), ein Gasauslassrohr (9), einen Gaskondensator (10), eine Düsensteuer- bzw. -regelleitung (11), einen Servomechanismus (12), eine Servomechanismussteuer- bzw. -regelleitung (13), eine Flüssigzustand-Metallcarbonylkomplex-Steuer- bzw. -Regelleitung (14), einen Computer (15), eine Festzustand-Metallcarbonylkomplex-Diethyletherlösung-Steuer- bzw. -Regelleitung (16), einen Lösungserhitzer (17), einen Durchflussmesser I (18), einen Lösungsspeichertank (19), einen Flüssigkeitsspeichertank (20), einen Durchflussmesser II (21), ein Flüssigzustand-Metallcarbonylkomplex-Förderrohr (22), ein Festzustand-Metallcarbonylkomplex-Diethyletherlösung-Förderrohr (23), einen Flüssigkeitserhitzer (24), eine Antriebspumpe (25) und eine Handschuhkasten-Betriebsöffnung (26);
wobei der Gaseinlass (1) an einem Boden des Handschuhkastens (2) montiert ist, die Handschuhkasten-Betriebsöffnung (26) an dem Handschuhkasten (2) bereitgestellt ist, das Gasauslassrohr (9) an einem oberen Teil des Handschuhkastens (2) montiert ist, der Gaskondensator (10) an dem Gasauslassrohr (9) montiert ist, der Gas-Flüssigkeit-Kollektor (7) an einem Ende des Gasauslassrohrs (9) verbunden bzw. angeschlossen ist und das Kollektorableitungsrohr (8) an dem Gas-Flüssigkeit-Kollektor (7) montiert ist;
wobei der Plattformerhitzer (6) innerhalb des Handschuhkasten (2) platziert ist, der Ablagetisch (5) an dem Plattformerhitzer (6) montiert ist, die Düse (3) über dem Ablagetisch (5) angeordnet ist, der Servomechanismus (12) mit dem Computer (15) über die Servomechanismussteuer- bzw. -regelleitung (13) verbunden ist, die Düse (3) mit dem Servomechanismus (12) über die Düsensteuer- bzw. -regelleitung (11) verbunden ist, die Antriebspumpe (25) mit der Düse (3) verbunden ist und die Antriebspumpe (25) mit dem Computer (15) über die Festzustand-Metallcarbonylkomplex-Diethyletherlösung-Steuer- bzw. -Regelleitung (16) und die Flüssigzustand-Metallcarbonylkomplex-Steuer- bzw. -Regelleitung (14) verbunden ist;
wobei der Durchflussmesser I (18) an dem Festzustand-Metallcarbonylkomplex-Diethyletherlösung-Förderrohr (23) angeordnet ist, der Lösungserhitzer (17) an dem Festzustand-Metallcarbonylkomplex-Diethyletherlösung-Förderrohr (23) angeordnet ist und der Lösungsspeichertank (19) mit der Antriebspumpe (25) über das Festzustand-Metallcarbonylkomplex-Diethyletherlösung-Förderrohr (23) verbunden ist; und
wobei der Durchflussmesser II (21) an dem Flüssigzustand-Metallcarbonylkomplex-Förderrohr (22) angeordnet ist, der Flüssigkeitserhitzer (24) an dem Flüssigzustand-Metallcarbonylkomplex-Förderrohr (22) angeordnet ist und der Flüssigkeitsspeichertank (20) mit der Antriebspumpe (25) über das Flüssigzustand-Metallcarbonylkomplex-Förderrohr (22) verbunden ist.

2. Rapid-Prototyping-3D-Druckvorrichtung auf Basis eines Metallcarbonylkomplexes nach Anspruch 1, **dadurch gekennzeichnet, dass** innerhalb der Düse (3) eine Mehrzahl von Zufuhröffnungen und eine Mischkammer bereitgestellt sind.

4. Rapid-Prototyping-3D-Druckvorrichtung auf Basis eines Metallcarbonylkomplexes nach Anspruch 1, **dadurch gekennzeichnet, dass** der Flüssigkeitsspeichertank (20) in der Anzahl eins oder zwei ist bzw. beträgt.

5. Rapid-Prototyping-3D-Druckvorrichtung auf Basis eines Metallcarbonylkomplexes nach Anspruch 1, **dadurch gekennzeichnet, dass** der Lösungsspeichertank (19) in der Anzahl eins bis sechs ist bzw. beträgt.

6. Rapid-Prototyping-Verfahren, das von der Rapid-Prototyping-3D-Druckvorrichtung auf Basis eines Metallcarbonylkomplexes nach Anspruch 1 durchgeführt wird, **dadurch gekennzeichnet, dass** das Verfahren die Schritte umfasst:
a. Hinzufügen, gemäß den Materialanforderungen eines zu druckenden Festkörpers, eines entsprechenden Flüssigzustand-Metallcarbonylkomplexes und einer entsprechende Festzustand-Metallcarbonylkomplex-Diethyletherlösung in den Flüssigkeitsspeichertank (20) bzw. den Lösungsspeichertank (19) und Inverbindungbringen entsprechender Rohre;
b. Vorladen einer ausreichenden Menge an Behandlungsflüssigkeit in den Gas-Flüssigkeits-Sammler (7) und Einbringen von Argon oder Stickstoff in den Handschuhkasten (2) aus dem Gaseinlass (1), so dass eine Schutzgasatmosphäre im Inneren des Handschuhkastens (2) erzeugt wird, um eine Oxidation eines elementaren Metalls zu verhindern;
c. der Computer (15) erstellt Festkörpermodellinformationen und erzeugt einen dreidimensionalen Bewegungssteuerungs- bzw. -regelungsbefehl und einen Durchflusssteuerungs- bzw. -regelungsbefehl für die Antriebspumpe (25) sowie Temperatursteuerungs- bzw. -regelungsbefehle für die einzelnen Heizer;
d. Steuern bzw. Regeln, gemäß den Temperatursteuerungs- bzw. -regelungsbefehlen für den Lösungsheizer (17) und den Flüssigkeitsheizer (24), der entsprechenden Metallcarbonylkomplexe dahingehend, bei Raumtemperatur in einem flüssigen Zustand zu sein, um den Fluss der Metallcarbonylkomplexe zu erleichterten und die entsprechenden Metallcarbonylkomplexe vorzuheizen, und Steuern bzw. Regeln, gemäß einem Temperatursteuerungs- bzw. -regelungsbefehle für einen Temperaturregler des Plattformheizers (6), der Metallcarbonylkomplexe dahingehend, sich zu zersetzen, und Diethylether dahingehend, sich zu verflüchtigen;
e. Steuern bzw. Regeln, gemäß den vom Computer (15) konstruierten Festkörpermodellinformationen, dem dreidimensionalen Bewegungssteuerungs--regelungsbefehl und dem Durchflusssteuerungs- bzw. -regelungsbefehl für die Antriebspumpe (25), der Düse (3) dahingehend, eine Mischung der Metallcarbonylkomplexe bei einer bestimmten Temperatur gerichtet und quantitativ auf den Ablagetisch (5) zu sprühen, um die Metallcarbonylkomplexe Schicht für Schicht zu stapeln;
f. Kondensieren eines Diethylethergases und CO durch den Gaskondensator (10) und anschließendes Einbringen des kondensierten Diethylethergases und CO in den Gas-Flüssigkeit-Kollektor (7) zum Sammeln und Behandeln; und G. Durchführen einer relevanten Wärmebehandlung an dem gedruckten festen Modell gemäß den Produktanforderungen.

7. Rapid-Prototyping-Verfahren, das von der Rapid-Prototyping-3D-Druckvorrichtung auf Basis eines Metallcarbonylkomplexes nach Anspruch 6 durchgeführt wird, **dadurch gekennzeichnet, dass** der Metallcarbonylkomplex ausgewählt ist aus der Gruppierung bestehend aus Nickeltetracarbonyl, Eisenpentacarbonyl, Chromhexacarbonyl, Wolframhexacarbonyl, Molybdänhexacarbonyl, Vanadiumhexacarbonyl, Dicobaltoctacarbonyl und Dimangan-Decacarbonyl.

8. Rapid-Prototyping-Verfahren, das von der Rapid-Prototyping-3D-Druckvorrichtung auf Basis eines Metallcarbonylkomplexes nach Anspruch 6 durchgeführt wird, **dadurch gekennzeichnet, dass** der Plattformheizer (6) bei einer Temperatur in dem Bereich von 34,6°C bis 160°C ist.

## Revendications

1. Appareil d'impression 3D pour prototypage rapide basé sur un complexe de métal carbonyle, **caractérisé en ce qu'**il comprend : une entrée de gaz (1), une boîte à gants (2), une buse (3), une table de dépôt (5), un dispositif de chauffage de plateforme (6), un collecteur de gaz-liquide (7), un tuyau d'échappement de collecteur (8), un tuyau de sortie de gaz (9), un condenseur de gaz (10), une ligne de commande de buse (11), un servomécanisme (12), une ligne de commande de servomécanisme (13), une ligne de commande de complexe de métal carbonyle à l'état liquide (14), un ordinateur (15), une ligne de commande de solution de diéthyléther de complexe de métal carbonyle à l'état solide (16), un dispositif de chauffage de solution (17), un débitmètre I (18), un réservoir de stockage de solution (19), un réservoir de stockage de liquide (20), un débitmètre II (21), un tuyau de transport de complexe de métal carbonyle à l'état liquide (22), un tuyau de transport de solution de diéthyléther de complexe de métal carbonyle à l'état solide (23), un dispositif de chauffage de liquide (24), une pompe d'entraînement (25) et une ouverture de fonctionnement de boîte à gants (26),
dans lequel l'entrée de gaz (1) est montée au niveau du fond de la boîte à gants (2), l'ouverture de fonctionnement de boîte à gants (26) est fournie sur la boîte à gants (2), le tuyau de sortie de gaz (9) est monté au niveau d'une partie supérieure de la boîte à gants (2), le condenseur de gaz (10) est monté sur le tuyau de sortie de gaz (9), le collecteur de gaz-liquide (7) est connecté à une extrémité du tuyau de sortie de gaz (9), et le tuyau d'échappement de collecteur (8) est monté sur le collecteur de gaz-liquide (7) ;
le dispositif de chauffage de plate-forme (6) est placé à l'intérieur de la boîte à gants (2), la table de dépôt (5) est montée sur le dispositif de chauffage de plate-forme (6), la buse (3) est agencée au-dessus de la table de dépôt (5), le servomécanisme (12) est connecté à l'ordinateur (15) via la ligne de commande de servomécanisme (13), la buse (3) est connectée au servomécanisme (12) via la ligne de commande de la buse (11), la pompe d'entraînement (25) est connectée à la buse (3), et la pompe d'entraînement (25) est connectée à l'ordinateur (15) via la ligne de commande de solution de diéthyléther de complexe de métal carbonyle à l'état solide (16) et la ligne de commande de complexe de métal carbonyle à l'état liquide (14) ;
le débitmètre I (18) est agencé sur le tuyau de transport de solution de diéthyléther de complexe de métal carbonyle à l'état solide (23), le dispositif de chauffage de solution (17) est agencé sur le tuyau de transport de solution de diéthyléther de complexe de métal carbonyle à l'état solide (23), et le réservoir de stockage de solution (19) est connecté à la pompe d'entraînement (25) via le tuyau de transport de solution de diéthyléther de complexe de métal carbonyle à l'état solide (23) ; et
le débitmètre II (21) est agencé sur le tuyau de transport de complexe de métal carbonyle à l'état liquide (22), le dispositif de chauffage de liquide (24) est agencé sur le tuyau de transport de complexe de métal carbonyle à l'état liquide (22), et le réservoir de stockage de liquide (20) est connecté à la pompe d'entraînement (25) via le tuyau de transport de complexe de métal carbonyle à l'état liquide (22).

2. Appareil d'impression 3D pour prototypage rapide basé sur un complexe de métal carbonyle selon la revendication 1, **caractérisé en ce qu'**une pluralité d'orifices d'alimentation et une chambre de mélange sont fournis à l'intérieur de la buse (3).

4. Appareil d'impression 3D pour prototypage rapide basé sur un complexe de métal carbonyle selon la revendication 1, **caractérisé en ce que** le réservoir de stockage de liquide (20) est au nombre de un ou deux.

5. Appareil d'impression 3D pour prototypage rapide basé sur un complexe de métal carbonyle selon la revendication 1, **caractérisé en ce que** le réservoir de stockage de solution (19) est au nombre de un à six.

6. Procédé de prototypage rapide effectué par l'appareil d'impression 3D pour prototypage rapide basé sur un complexe de métal carbonyle selon la revendication 1, **caractérisé en ce que** le procédé comprend les étapes suivantes :
a. l'ajout, en fonction des besoins en matière d'un solide devant être imprimé, d'un complexe de métal carbonyle à l'état liquide correspondant et d'une solution de diéthyléther de complexe de métal carbonyle à l'état solide correspondante dans le réservoir de stockage de liquide (20) et le réservoir de stockage de solution (19), respectivement, et la mise en communication des tuyaux correspondants ;
b. le chargement préalable d'une quantité suffisante de liquide de traitement dans le collecteur de gaz-liquide (7), et l'introduction d'argon ou d'azote dans la boîte à gants (2) à partir de l'entrée de gaz (1), de sorte qu'une atmosphère de gaz protecteur est créée à l'intérieur de la boîte à gants (2), pour éviter l'oxydation d'un métal élémentaire ;
c. au moyen de l'ordinateur (15), la construction d'informations de modèle de solide et la génération d'une commande de régulation de déplacement tridimensionnelle et d'une commande de régulation de débit pour la pompe d'entraînement (25), ainsi que de commandes de régulation de température pour les dispositifs de chauffage individuels ;
d. la commande, conformément aux commandes de régulation de température pour le dispositif de chauffage de solution (17) et le dispositif de chauffage de liquide (24), des complexes de métal carbonyle correspondants pour qu'ils soient dans un état liquide à température ambiante, de manière à faciliter l'écoulement des complexes de métal carbonyle et à préchauffer les complexes de métal carbonyle correspondants, et la commande, conformément à une commande de régulation de température pour un dispositif de régulation de température du dispositif de chauffage de plate-forme (6), des complexes de métal carbonyle pour qu'ils se décomposent et du diéthyléther pour qu'il se volatilise ;
e. la commande, conformément aux informations de modèle de solide construites par l'ordinateur (15), à la commande de régulation de déplacement tridimensionnelle et à la commande de régulation de débit pour la pompe d'entraînement (25), de la buse (3) pour pulvériser de manière directionnelle et quantitative un mélange des complexes de métal carbonyle sur la table de dépôt (5) à une certaine température, pour empiler les complexes de métal carbonyle couche par couche ;
f. la condensation du diéthyléther gazeux et du CO par le condenseur de gaz (10), et ensuite l'introduction du diéthyléther gazeux et du CO condensés dans le collecteur de gaz-liquide (7) à des fins de collecte et de traitement ; et
g. la mise en œuvre d'un traitement thermique approprié sur le modèle de solide imprimé, conformément aux exigences du produit.

7. Procédé de prototypage rapide effectué par l'appareil d'impression 3D pour prototypage rapide basé sur un complexe de métal carbonyle selon la revendication 6, **caractérisé en ce que** le complexe de métal carbonyle est sélectionné dans le groupe constitué du tétracarbonyle de nickel, du pentacarbonyle de fer, de l'hexacarbonyle de chrome, de l'hexacarbonyle de tungstène, de l'hexacarbonyle de molybdène, de l'hexacarbonyle de vanadium, de l'octacarbonyle de dicobalt et du décacarbonyle de dimanganèse.

8. Procédé de prototypage rapide effectué par l'appareil d'impression 3D pour prototypage rapide basé sur un complexe de métal carbonyle selon la revendication 6, **caractérisé en ce que** le dispositif de chauffage de plate-forme (6) est à une température allant de 34,6 °C à 160 °C.
